# EUROPÄISCHE PATENTSCHRIFT

(11) **EP 1 913 281 B1**
(45) Veröffentlichungstag und Bekanntmachung des Hinweises auf die Patenterteilung: **25.01.2012**
(21) Anmeldenummer: 06764133.2
(22) Anmeldetag: 12.07.2006
(51) Int. Cl.: F16D 65/14, F16D 65/092

(54) **SELBSTVERSTÄRKENDE ELEKTROMECHANISCHE SCHEIBENBREMSE**
SELF-REINFORCING ELECTROMECHANICAL DISK BRAKE
FREIN A DISQUE ELECTROMECANIQUE A AUTORENFORCEMENT

(30) Priorität: 05.08.2005 DE 102005037009
(43) Veröffentlichungstag der Anmeldung: 23.04.2008
(73) Patentinhaber: ROBERT BOSCH GMBH, 70442 Stuttgart (DE)
(72) Erfinder: CAO, Chi-Thuan, 70825 Korntal-Muenchingen (DE); BAUMANN, Dietmar, 71282 Hemmingen (DE); HOFMANN, Dirk, 70439 Stuttgart (DE); VOLLERT, Herbert, 71665 Vaihingen/Enz (DE); NAGEL, Willi, 71686 Remseck/Hochdorf (DE); HENKE, Andreas, 34474 Diemelstadt (DE); FOITZIK, Bertram, 71636 Ludwigsburg (DE); GOETZELMANN, Bernd, 71063 Sindelfingen (DE); FRICK, Hans, 87487 Wiggensbach (DE)
(86) Internationale Anmeldenummer: PCT/EP2006/064121
(87) Internationale Veröffentlichungsnummer: WO 2007/017333

(56) Entgegenhaltungen:
- WO-A-2005/061920
- DE-U1- 9 217 449
- GB-A- 2 291 150
- US-A- 4 854 425
- US-A1- 2003 155 193
- US-A1- 2004 245 056

## Beschreibung

### Stand der Technik

Die Erfindung betrifft eine selbstverstärkende elektromechanische Scheibenbremse gemäß dem Oberbegriff des Anspruchs 1.

Elektromechanische Scheibenbremsen sind an sich bekannt. Sie weisen eine elektromechanische Betätigungseinrichtung auf, mit der zur Betätigung der Scheibenbremse, also zum Bremsen, ein Reibbremsbelag gegen eine Bremsscheibe drückbar ist. Die elektromechanische Betätigungseinrichtung weist üblicherweise einen Elektromotor auf, mit dem über ein Rotations-/Translations-Umsetzungsgetriebe, beispielsweise einen Gewindetrieb, der Reibbremsbelag gegen die Bremsscheibe drückbar ist. Vielfach ist dem Elektromotor und dem Rotations-/Translations-Umsetzungsgetriebe ein Untersetzungsgetriebe zwischengeschaltet. Es bestehen auch andere Möglichkeiten eines Rotations-/ Translations-Umsetzungsgetriebes, beispielsweise kann mittels des Elektromotors, vorzugsweise über ein Untersetzungsgetriebe, ein Nocken geschwenkt werden, der den Reibbremsbelag gegen die Bremsscheibe drückt oder es findet ein Zahnstangengetriebe Verwendung, bei dem ein Zahnrad eine Zahnstange bewegt, die den Reibbremsbelag verschiebt. Die Zahnstange muss nicht gerade sein.

Zur Erzielung einer Selbstverstärkung sind Rampenmechanismen bekannt mit einer Rampe oder einem Satz Rampen, die eine Steigung in Bezug auf die Bremsscheibe aufweisen, d. h. ein Abstand zwischen der oder den Rampen und der Bremsscheibe verkleinert sich in einer tangentialen- oder einer Umfangsrichtung der Bremsscheibe. Die Rampen können beispielsweise einen schraubenlinienförmigen Verlauf aufweisen. Die Steigung der Rampe oder Rampen kann sich im Verlauf der Rampe oder Rampen ändern, damit sich die Höhe der Selbstverstärkung bei Betätigung der Scheibenbremse ändert. So können die Rampe oder Rampen zu Beginn eine große Steigung aufweisen, um ein Lüftspiel zwischen dem Reibbremsbelag und der Bremsscheibe zu Beginn der Betätigung der Scheibenbremse schnell zu überwinden und an ihrem Ende können die Rampe oder Rampen eine kleine Steigung aufweisen, um bei hoher Betätigungs- und Bremskraft eine hohe Selbstverstärkung zu erzielen. Weisen die Rampe oder Rampen eine konstante Steigung über ihre Länge auf, spricht man auch von einem Keil oder Keilen und von einem Keilmechanismus. Die Rampe oder Rampen können am Bremssattel und/oder am Reibbremsbelag, dort vorzugsweise an dessen der Bremsscheibe abgewandter Rückseite, angeordnet sein.

Der Reibbremsbelag stützt sich über die Rampe oder Rampen an einem Bremssattel der Scheibenbremse ab. Zur Betätigung der Scheibenbremse wird der Reibbremsbelag mit der elektromechanischen Betätigungseinrichtung entlang der Rampe oder Rampen verschoben, bis er an der Bremsscheibe anliegt und gegen die Bremsscheibe drückt. Die drehende Bremsscheibe übt eine Reibungskraft auf den Reibbremsbelag aus, die diesen in Richtung der ansteigenden Rampe oder Rampen beaufschlagt. Die Abstützung des Reibbremsbelags an der oder den Rampen bewirkt nach dem Keillprinzip eine Normalkraft zu den Rampen auf den Reibbremsbelag, die eine Normalkraftkomponente zur Bremsscheibe auf den Reibbremsbelag ausübt und den Reibbremsbelag zusätzlich zu einer von der Betätigungseinrichtung bewirkten Andruckkraft gegen die Bremsscheibe drückt. Die Andruck- und Bremskraft der Scheibenbremse wird dadurch verstärkt. Üblicherweise ist der Reibbremsbelag lösbar oder unlösbar auf einer der Bremsscheibe zugewandten Vorderseite einer Belagträgerplatte angeordnet, auf deren der Bremsscheibe abgewandter Rückseite der Rampenmechanismus, d. h. die Selbstverstärkungseinrichtung angeordnet ist.

Die bekannten Scheibenbremsen weisen einen Bremssattel auf, an oder in dem die elektromechanischen Teile der Scheibenbremse untergebracht sind, wobei unter elektromechanischen Teilen sowohl die Bauteile der Betätigungseinrichtung als auch der Selbstverstärkungseinrichtung zu verstehen sind.

Der Bremssattel elektromechanischer Scheibenbremsen ist üblicherweise, allerdings nicht zwingend, als Schwimmsattel ausgebildet, d. h. er ist quer zur Bremsscheibe verschieblich. Beim Andrücken des einen Reibbremsbelags gegen die eine Seite der Bremsscheibe verschiebt sich der Bremssattel quer zur Bremsscheibe und drückt einen anderen Reibbremsbelag gegen die andere Seite der Bremsscheibe, so dass zum Andrücken beider Reibbremsbeläge nur eine Betätigungseinrichtung und eine Selbstverstärkungseinrichtung erforderlich sind. Die Betätigungseinrichtung und die Selbstverstärkungseinrichtung müssen nicht auf der gleichen Seite der Bremsscheibe angeordnet sein.

Die Patentanmeldung US 2004/0 245 056 A1 offenbart eine selbstverstärkende elektromechanische Scheibenbremse gemäß dem Oberbegriff des Anspruchs 1, bei der sich ein Reibbremsbelag in einem Schlitz einer drehbaren Stützscheibe abstützt. Der Schlitz bildet eine Führung für den Reibbremsbelag, deren Winkel zur Bremsscheibe durch Drehen der Stützscheibe veränderlich ist. Dadurch lässt sich die Höhe der Selbstverstärkung ändern.

Die Patentanmeldung US 2003/0 155 193 A1 offenbart einen Reibbremsbelag für eine herkömmliche, hydraulische Scheibenbremse, der auf eine nicht-metallische Belagträgerplatte aufgebracht ist. In einem Ausführungsbeispiel besteht die Belagträgerplatte aus einem faserverstärkten Kunststoff. Die Belagträgerplatte weist keine Rampen eines Rampenmechanismus für eine Selbstverstärkung und keine Zahnstange zum Verschieben des Reibbremsbelags zu einer Bremsbetätigung auf. Die Belagträgerplatte de bekannten Reibbremsbelags ist ungeeignet für elektromechanische und/oder selbstverstärkende Scheibenbremsen.

### Erläuterung und Vorteile der Erfindung

Die Belagträgerplatte der erfindungsgemäßen selbstverstärkenden elektromechanischen Scheibenbremse mit den Merkmalen des Anspruchs 1 ist aus einem Verbundwerkstoff mit Beton als Grundwerkstoff (Matrix) und einer Armierung hergestellt. In den Beton können Fäden, Fasern, Whisker, Matten, Gewebe oder Drähte aus einem anderen, ggf. auch aus verschiedenen Werkstoffen als Armierung, eine Beton- oder sonstige Armierung eingearbeitet sein. Durch die Herstellung aus einem betonarmierten Verbundwerkstoff ist die Belagträgerplatte biegesteif und torsionssteif ausbildbar. Die Biegesteifigkeit und die Torsionssteifigkeit sind bei Scheibenbremsen mit Selbstverstärkung von größerer Bedeutung als beispielsweise bei herkömmlichen, hydraulischen Scheibenbremsen, bei denen die Belagträgerplatten vergleichsweise großflächig an einem Bremskolben oder im Bremssattel abgestützt sind. Bei selbstverstärkenden Scheibenbremsen sind die Belagträgerplatten vielfach nur punktartig abgestützt, beispielsweise mit einer Dreipunktabstützung mit drei Wälzkörpern, die an den Ecken eines gedachten Dreiecks auf einer der Bremsscheibe abgewandten Rückseite der Belagträgerplatte angeordnet sind. Die Biegebeanspruchung und die Torsionsbeanspruchung der Belagträgerplatte ist wesentlich höher als bei im Bremssattel abgestützten Belagträgerplatten von Scheibenbremsen ohne Selbstverstärkung.

Vorteile der Erfindung sind eine preisgünstige Herstellbarkeit der Belagträgerplatte, deren geringe Wärmeleitfähigkeit, die eine Wärmeübertragung vom Reibbremsbelag auf einen Bremssattel verringert und abhängig vom Verbundwerkstoff gute Geräuschdämpfungseigenschaften.

Weitere Vorteile sind, dass sich Verbundwerkstoffe bei niedrigen Temperaturen verarbeiten, d.h. herstellen lassen und dennoch wärmebeständig sind und eine geringe Schwindung bei der Herstellung aufweisen. Es lassen sich kleine Toleranzen einhalten, so dass Funktionsflächen wie Laufflächen für die Wälzkörper der Selbstverstärkungseinrichtung oder Lagerlöcher nicht nachgearbeitet werden müssen.

Die Unteransprüche haben vorteilhafte Ausgestaltungen und Weiterbildungen der im Anspruch 1 angegebenen Erfindung zum Gegenstand.

### Zeichnung

Die Erfindung wird nachfolgend anhand eines in der Zeichnung dargestellten Ausführungsbeispiels näher erläutert. Es zeigen:
- Figur 1: eine erfindungsgemäße selbstverstärkende elektromechanische Scheibenbremse mit Blickrichtung radial von außen zu einer Bremsscheibe;
- Figur 2: eine vergrößerte Einzelheitdarstellung gemäß Pfeil II in Figur 1;
- Figur 3: eine Abwandlung der in Figur 2 dargestellten Einzelheit; und
- Figur 4: einen Querschnitt einer Zahnstange der Scheibenbremse aus Figur 1.

### Beschreibung des Ausführungsbeispiels

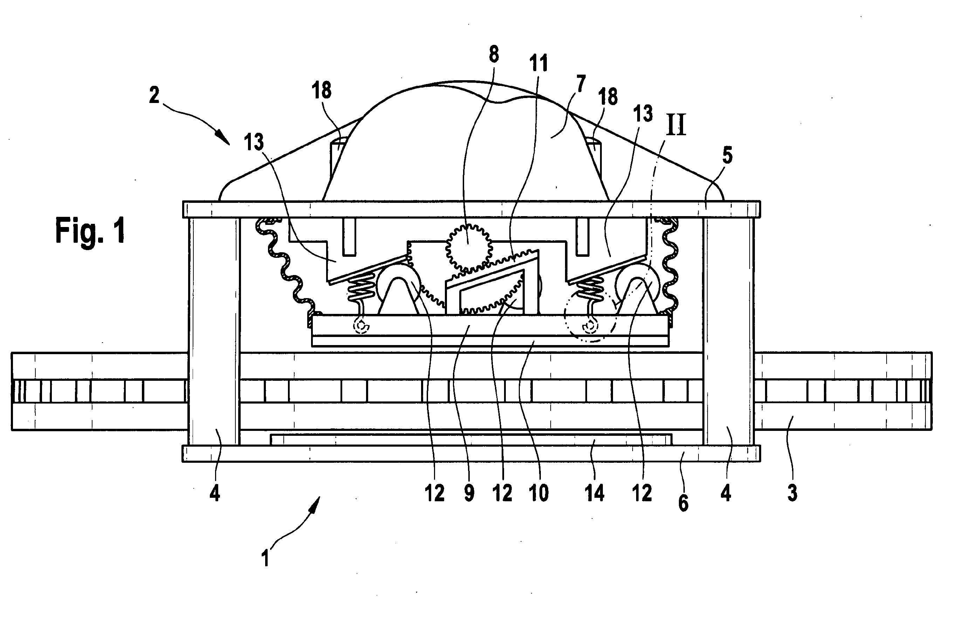

Die in Figur 1 dargestellte erfindungsgemäße selbstverstärkende elektromechanische Scheibenbremse 1 weist einen Bremssattel 2 auf, der als Schwimmsattel ausgebildet ist, d. h. er ist quer zu einer Bremsscheibe 3 verschieblich geführt. Eine Schiebeführung des Bremssattels 2 ist in der Zeichnung von Ankern 4 des Bremssattels 2 verdeckt und nicht sichtbar. Solche Schiebeführungen sind an sich bekannt und brauchen deswegen hier nicht näher erläutert zu werden.

Der Bremssattel 2 weist zwei mit Abstand voneinander und parallel zueinander angeordnete Platten 5, 6 auf, die sich beiderseits der Bremsscheibe 3 befinden und parallel zur Bremsscheibe 3 angeordnet sind. Die beiden Platten 5, 6 sind an ihren Längsenden durch die Anker 4 miteinander verbunden. Die Anker 4 verlaufen quer zur Bremsscheibe 3 und sind außerhalb eines Umfangs der Bremsscheibe 3 angeordnet. Die Anker 4 befinden sich in etwa in Längsmitten der Platten 5, 6, wodurch sie bei Betätigung der Scheibenbremse 2 im Wesentlichen nur auf Zug und allenfalls gering auf Biegung beansprucht werden und die Platten 5, 6 parallel zueinander bleiben und nicht durch eine Betätigungs- oder Zuspannkraft der Scheibenbremse 1 schräg auseinander gedrückt werden. Mit den beiderseits der Bremsscheibe 3 angeordneten Platten 5, 6, die durch die Anker 4 miteinander verbunden sind, bildet der Bremssattel 2 einen sogenannten Rahmensattel.

Auf einer der Bremsscheibe 3 zugewandten Innenseite der Platte 5 des Bremssattels 2 ist eine Belagträgerplatte 9 mit einem Reibbremsbelag 10 nahe der Bremsscheibe 3 und mit Abstand von der Platte 5 angeordnet. Die Belagträgerplatte 9 mit dem Reibbremsbelag 10 ist beweglich gegenüber der Platte 5 und dem Bremssattel 2. Die Belagträgerplatte 9 weist eine Zahnstange 11 auf ihrer der Bremsscheibe 3 abgewandten Rückseite auf, mit der ein Zahnrad 8 kämmt. Die Zahnstange 11 verläuft schräg in einem Winkel zur Bremsscheibe 3 und außerdem kreisbogenförmig um eine Drehachse der Bremsscheibe 3, d. h. der Verlauf der Zahnstange 11 ist schraubenlinienförmig.

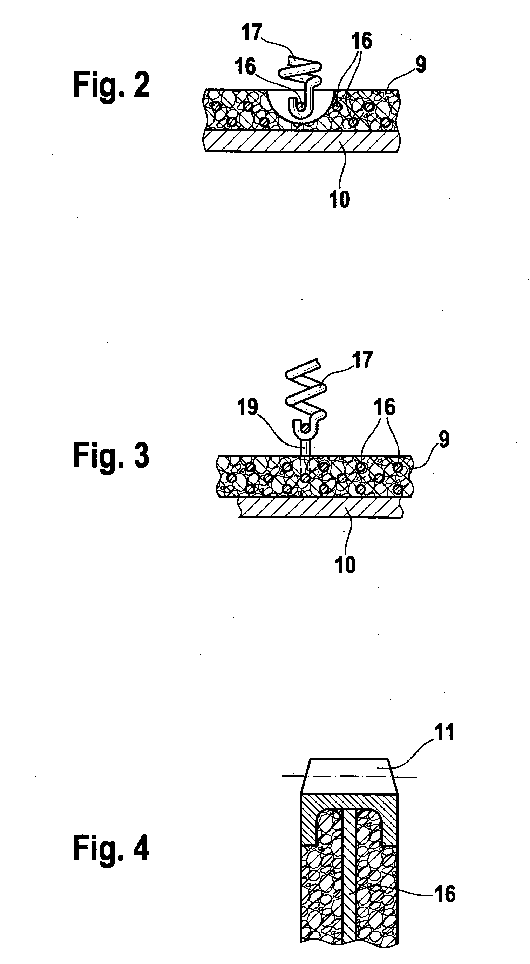

Die Belagträgerplatte 9 stützt sich über drei Wälzkörper 12 (Rollen), die auf ihrer Rückseite angeordnet und drehbar gelagert sind, an Rampen 13, die auch als Keile bezeichnet werden können, ab, die auf der der Bremsscheibe 3 zugewandten Innenseite der Platte 5 des Bremssattels 2 angeordnet sind. Die Rampen 13 verlaufen mit gleicher Steigung wie die Zahnstange 11 schraubenlinienförmig, d. h. in einem Winkel zur Bremsscheibe 3 um eine Drehachse der Bremsscheibe 3. Die Wälzkörper 12 sind an Ecken eines gedachten Dreiecks mit einer langen Grundseite angeordnet, es befinden sich zwei Wälzkörper 12 und zwei Rampen 13 bezüglich der Bremsscheibe 3 radial weiter außen als der dritte oder mittlere Wälzkörper 12 und die zugehörige Rampe, der/die sich in Umfangsrichtung der Bremsscheibe 3, d. h. in Längsrichtung der Platte 5 des Bremssattels 2 zwischen den beiden anderen Wälzkörpern 12 und den beiden anderen Rampen 13 befindet. Dadurch ergibt sich eine statisch bestimmte Dreipunktabstützung der Belagträgerplatte 9 im Bremssattel 2. Wie in Figur 2 zu sehen, weisen die Rampen 13 eine Querneigung auf, wobei die Querneigung der mittleren, radial weiter innen befindlichen Rampe 13 nach außen und damit der Querneigung der radial äußeren Rampen 13, die nach innen geneigt sind, entgegengerichtet ist. Dadurch wird eine Längsführung der Belagträgerplatte 9 erreicht. Grundsätzlich kann auch umgekehrt die mittlere Rampe 13 in Bezug auf die Bremsscheibe 3 radial weiter außen als die beiden anderen Rampen 13 angeordnet und/oder die Querneigungen der Rampen 13 umgekehrt sein.

Die Betätigung der Scheibenbremse 2 erfolgt mittels eines Elektromotors, der das mit der Zahnstange 11 kämmende Zahnrad 8 über ein Untersetzungsgetriebe (Zahnradgetriebe) antreibt. Der Elektromotor und das Getriebe sind in einem Gehäuse 7 im Bremssattel 2 untergebracht und deswegen in der Zeichnung nicht sichtbar. Die Zahnstange 11 und mit ihr die Belagträgerplatte 9 werden in Umfangsrichtung oder genauer gesagt auf einer schraubenlinienförmigen Bahn zur Bremsscheibe 3 bewegt. Dabei wälzen die Wälzkörper 12 der Belagträgerplatte 9 auf den Rampen 13 des Bremssattels 2. Der Reibbremsbelag 10 wird gegen die Bremsscheibe 3 gedrückt und verschiebt den als Schwimmsattel ausgebildeten Bremssattel 2 quer zur Bremsscheibe 3, so dass auch ein zweiter, fest auf einer der Bremsscheibe 3 zugewandten Innenseite der anderen Platte 6 des Bremssattels 2 angeordneter Reibbremsbelag 14 gegen die andere Seite der Bremsscheibe 3 gedrückt wird. Die Bremsscheibe 3 wird gebremst. Der Elektromotor, das Untersetzungsgetriebe und die Zahnstange 11 bilden eine elektromechanische Betätigungseinrichtung der Scheibenbremse 2.

Die drehende Bremsscheibe 3 übt eine Reibungskraft in Umfangsrichtung auf die gegen sie gedrückten Reibbremsbeläge 10, 14 aus, die die Belagträgerplatte 9 in ihrer Verschieberichtung beaufschlagt. Die Abstützung der Belagträgerplatte 9 durch die Wälzkörper 12 an den Rampen 13 des Bremssattels 2 bewirkt auf Grund des zur Bremsscheibe 3 schrägen Verlaufs der Rampen 13 gemäß dem sog. Keilprinzip eine Normalkraft zu den Rampen 13, die auf die Wälzkörper 12 einwirkt. Diese Normalkraft zu den Rampen 13 weist eine Komponente quer zur Bremsscheibe 3 auf, die die Belagträgerplatte 9 mit dem Reibbremsbelag 10 zusätzlich zu der vom Elektromotor erzeugten Andruckkraft gegen die Bremsscheibe 3 drückt. Die Bremskraft wird dadurch erhöht. Die Wälzkörper 12 und die Rampen 13 bilden eine Selbstverstärkungseinrichtung der Scheibenbremse 2.

Im dargestellten und beschriebenen Ausführungsbeispiel der Erfindung ist der Verbundwerkstoff, aus dem die Belagträgerplatte 9 besteht, ein Beton als Grundwerkstoff (Matrix) mit einer Stahlarmierung 16. Die Stahlarmierung 16 kann als Fasern aufgefasst werden und der Beton mit der Stahlarmnierung 16 insoweit als Faserverbundwerkstoff angesehen werden. In den Beton können auch Fasern in Form von Matten oder Geweben als Armierung eingebetet sein (nicht dargestellt). Die Darstellung ist mit Ausnahme der Schraffuren gleich.

Bei der in Figur 2 dargestellten Belagträgerplatte 9 ist eine Ausnehmung in der Belagträgerplatte 9 vorgesehen, die eine Stahlarmierung 16 freilegt. In diese Stahlarmierung ist eine Rückhohlfeder 17 eingehängt. Die Rückholfeder 17 zieht die Belagträgerplatte 9 in Richtung des Bremssattels 2 und hebt den Reibbremsbelag 10 bei nicht betätigter Scheibenbremse 1 von der Bremsscheibe 3 ab. In Figur 3 ist eine Stahlarmierng 16 zu einer Öse 19 gebogen, in die die Rückholfeder 17 eingehängt ist. Die freigelegte Stahlarmnierung 16 bzw. die Öse 19 bilden Befestigungselemente zum Einhängen der Rückholfeder 17. Anstatt einstückig mit der Stahlarmierung 16 kann die Öse 19 oder ein sonstiges Befestigungselement die Armierung oder bei einem faserverstärkten Kunststoff die Faserverstärkung hintergreifen um sie gut im Grundwerkstoff, d.h. in der Belagträgerplatte 9 zu verankern.

Wie in Figur 4 zu sehen ist die Zahnstange 11 mit der Stahlarmierung 16 der Belagträgerplatte 9 durch Schweißen verbunden. Zur Herstellung der Belagträgerplatte 9 ist es möglich, die Stahlarmierung 16 zu einem räumlichen Gebilde zu formen und die Zahnstange 11 anzuschweißen. Anschließend wird die Stahlarmierung 16 in eine Form eingelegt und mit Beton umgossen.

## Patentansprüche

1. Selbstverstärkende elektromechanische Scheibenbremse, mit einer elektromechanischen Betätigungseinrichtung, mit der ein Reibbremsbelag (10), der auf einer Belagträgerplatte (9) angeordnet ist, zum Bremsen gegen eine Bremsscheibe (3) drückbar ist, und mit einer Selbstverstärkungseinrichtung (12, 13), die eine beim Bremsen von der drehenden Bremsscheibe (3) auf den gegen sie gedrückten Reibbremsbelag (10) ausgeübte Reibungskraft in eine Andruckkraft wandelt, die den Reibbremsbelag (10) zusätzlich zu einer von der Betätigungseinrichtung aufgebrachten Andruckkraft gegen die Bremsscheibe (3) drückt, **dadurch gekennzeichnet, dass** die Belagträgerplatte (9) aus einem Verbundwerkstoff besteht, die Beton als Grundwerkstoff und eine Armierung (16) aufweist.

2. Selbstverstärkende elektromechanische Scheibenbremse nach Anspruch 1, **dadurch gekennzeichnet, dass** die Belagträgerplatte (9) eine Zahnstange (11) zum Antrieb durch die elektromechanische Betätigungseinrichtung aus einem verschleißfesten Material aufweist.

3. Selbstverstärkende elektromechanische Scheibenbremse nach Anspruch 2, **dadurch gekennzeichnet, dass** die Zahnstange (11) mit der Armierung (16) des Verbundwerkstoffs verbunden ist.

4. Selbstverstärkende elektromechanische Scheibenbremse nach Anspruch 1, **dadurch gekennzeichnet, dass** die Belagträgerplatte (9) ein Befestigungselement (16, 19) aufweist, das mit der Armierung (16) des Verbundwerkstoffs verbunden ist.

## Claims

1. Self-energizing electromechanical disc brake, having an electromechanical actuating device, by way of which a friction brake lining (10) which is arranged on a lining carrier plate (9) can be pressed against a brake disc (3) for braking, and having a self-energizing device (12, 13) which converts a frictional force which is exerted during braking by the rotating brake disc (3) on the friction brake lining (10) which is pressed against it into a pressing force which, in addition to a pressing force which is applied by the actuating device, presses the friction brake lining (10) against the brake disc (3), **characterized in that** the lining carrier plate (9) consists of a composite material which has concrete as basic material and a reinforcement (16).

2. Self-energizing electromechanical disc brake according to Claim 1, **characterized in that** the lining carrier plate (9) has a rack (11) made from a wear-resistant material for driving by the electromechanical actuating device.

3. Self-energizing electromechanical disc brake according to Claim 2, **characterized in that** the rack (11) is connected to the reinforcement (16) of the composite material.

4. Self-energizing electromechanical disc brake according to Claim 1, **characterized in that** the lining carrier plate (9) has a fastening element (16, 19) which is connected to the reinforcement (16) of the composite material.

## Revendications

1. Frein à disque électromécanique à auto-amplification, comportant un dispositif d'actionnement électromécanique à l'aide duquel une garniture de frein à friction (10), qui est disposée sur une plaque de support de garniture (9), peut être pressée contre un disque de frein (3) en vue du freinage, et comportant un dispositif d'auto-amplification (12, 13) qui transforme une force de frottement exercée lors du freinage par le disque de frein (3) rotatif sur la garniture de frein à friction (10) pressée contre celui-ci en une force de pression qui, en plus d'une force de pression appliquée par le dispositif d'actionnement, presse la garniture de frein à friction (10) contre le disque de frein (3), **caractérisé en ce que** la plaque de support de garniture (9) est constituée d'un matériau composite qui comprend du béton en tant que matériau de base et une armature (16).

2. Frein à disque électromécanique à auto-amplification selon la revendication 1, **caractérisé en ce que** la plaque de support de garniture (9) comprend une crémaillère (11) en une matière résistante à l'usure pour l'entraînement à l'aide du dispositif d'actionnement électromécanique.

3. Frein à disque électromécanique à auto-amplification selon la revendication 2, **caractérisé en ce que** la crémaillère (11) est reliée à l'armature (16) du matériau composite.

4. Frein à disque électromécanique à auto-amplification selon la revendication 1, **caractérisé en ce que** la plaque de support de garniture (9) comprend un élément de fixation (16, 19) qui est relié à l'armature (16) du matériau composite.
